# DEMANDE DE BREVET EUROPEEN

(11) **EP 4 586 096 A1**
(43) Date de publication de la demande: **16.07.2025**
(21) Numéro de dépôt: 25150570.7
(22) Date de dépôt: 07.01.2025
(51) Int. Cl.: G06F 11/07, G06F 11/10

(54) **GESTION DES INTERRUPTIONS D'UN CONTRÔLEUR DE MÉMOIRE DE CIRCUIT INTÉGRÉ**

(30) Priorité: 11.01.2024 FR 2400264
(71) Demandeur: STMicroelectronics International N.V., 1228 Plan-les-Ouates, Geneva (CH)
(72) Inventeur: LACAN, Jérôme, 13530 Trets (FR); CLAUSS, Raphaël, 38120 Saint Egreve (FR); BRIAT, Gérald, 38450 Vif (FR)
(74) Mandataire: Casalonga

(57) **Abrégé**

Selon un aspect, il est proposé un circuit intégré (IC) comprenant un contrôleur de mémoire (MEM_CTRL) configuré pour transmettre une information stockée dans une mémoire (ECC_MEM) à une unité de traitement (UT), le contrôleur de mémoire (MEM_CTRL) comprenant :
- un circuit de détection d'erreur (ECC_CTRL) configuré pour détecter une erreur dans ladite information en mettant en oeuvre un algorithme de code de correction d'erreur, et pour générer un signal d'interruption (INT) en cas de détection d'au moins une erreur dans ladite information,
- un circuit de contrôle de transmission (INT_CTRL) configuré pour transmettre le signal d'interruption (INT) à l'unité de traitement (UT) uniquement lorsque l'erreur est détectée pour la première fois dans ladite information par le circuit de détection d'erreur.

## Description

Des modes de réalisation et de mise en oeuvre concernent un contrôleur de mémoire de circuit intégré, et plus particulièrement la gestion des interruptions du contrôleur de mémoire au sein d'un circuit intégré.

Un contrôleur de mémoire permet à un processeur d'accéder à des informations, telles que des instructions ou des données, stockées dans une mémoire. Le contrôleur de mémoire peut notamment détecter une erreur dans une information en mettant en oeuvre un code correcteur d'erreur lors de la transmission de cette information au processeur.

Lorsqu'une erreur dans une information est détectée par le contrôleur de mémoire, ce dernier peut générer une interruption permettant d'indiquer au processeur que l'information transmise contient une erreur.

Toutefois, il peut être envisagé de corriger l'erreur dans l'information lue par le contrôleur de mémoire au lieu de corriger cette erreur directement dans la mémoire. En effet, la correction de l'erreur dans la mémoire peut nécessiter un effacement et une réécriture de l'information qui peuvent être des opérations relativement longues, notamment lorsque la mémoire est une mémoire non-volatile (« non-volatile memory » en anglais). La correction d'erreur réalisée par le contrôleur de mémoire est donc généralement plus rapide et privilégiée, en particulier dans le cas d'applications en temps réel.

Par ailleurs, lorsque la mémoire stocke plusieurs instructions d'une séquence d'instructions, le processeur peut prévoir un mécanisme de pré-chargement permettant de lire dans cette mémoire chacune de ces instructions à l'avance en parallèle de l'exécution d'autres instructions de la séquence d'instructions afin d'améliorer les performances du processeur.

Plus particulièrement, ce mécanisme de pré-chargement peut déclencher une interruption lorsque l'instruction lue en avance contient une erreur, arrêtant ainsi temporairement l'exécution de la séquence d'instructions.

Tant que l'instruction n'est pas exécutée avant l'interruption de la séquence d'instructions, le processeur continuera à lire la même instruction après avoir traité l'interruption.

Le mécanisme de pré-chargement entraîne par conséquent un déclenchement répété de l'interruption tant que l'erreur contenue dans cette instruction n'a pas été corrigée dans la mémoire.

En d'autres termes, le déclenchement répété de l'interruption empêche le processeur de poursuivre l'exécution de la séquence d'instructions car le processeur tentera toujours d'accéder au même emplacement dans la mémoire de l'instruction erronée après chaque interruption.

A cet égard, une désactivation des interruptions peut être envisagée afin d'empêcher le déclenchement répété de l'interruption pour une même erreur contenue dans une instruction, mais cette solution ne permet pas de déterminer l'emplacement dans la mémoire de l'instruction erronée. Par conséquent, lorsque cette solution est envisagée, les instructions erronées dont l'emplacement dans la mémoire ne peut pas être retrouvé par l'unité de traitement, ne pourront pas être corrigées.

Ainsi, il existe un besoin de proposer des solutions permettant de détecter et corriger une erreur dans une information tout en évitant un accès répété au même emplacement dans la mémoire par le processeur lors des interruptions générées par le contrôleur de mémoire.

Selon un aspect, il est proposé un circuit intégré comprenant un contrôleur de mémoire configuré pour transmettre une information, une instruction ou une donnée par exemple, stockée dans une mémoire à une unité de traitement, tel qu'un processeur par exemple, le contrôleur de mémoire comprenant :
- un circuit de détection d'erreur configuré pour détecter une erreur, ou éventuellement plusieurs erreurs, dans ladite information en mettant en oeuvre un algorithme de code de correction d'erreur, et pour générer un signal d'interruption en cas de détection d'une erreur dans ladite information,
- un circuit de contrôle de transmission configuré pour transmettre le signal d'interruption à l'unité de traitement uniquement lorsque l'erreur est détectée pour la première fois dans ladite information par le circuit de détection d'erreur.

En transmettant le signal d'interruption à l'unité de traitement uniquement la première fois que l'erreur est détectée, on évite le déclenchement répété du signal d'interruption qui conduit l'unité de traitement à rentrer dans une boucle infinie dans laquelle ce même signal d'interruption est traité par l'unité de traitement.

Ainsi, en l'absence de déclenchement répété du signal d'interruption, il n'est plus nécessaire de désactiver les interruptions pour mettre fin à cette boucle infinie et il devient possible de corriger les erreurs dans les instructions stockées dans la mémoire lors d'une maintenance.

Selon un mode de réalisation, le circuit de contrôle de transmission comporte un circuit de mémorisation configuré pour mémoriser l'adresse de l'emplacement dans la mémoire de la dernière information ayant déclenchée une transmission du signal d'interruption, et un circuit logique configuré pour comparer l'adresse mémorisée par le circuit de mémorisation avec l'adresse de l'emplacement dans la mémoire de la prochaine information, pour laquelle une erreur est détectée, transmise par le contrôleur de mémoire après ladite dernière information de façon à transmettre le signal d'interruption à l'unité de traitement uniquement lorsque l'adresse de l'emplacement dans la mémoire de ladite prochaine information ne correspond pas à l'adresse mémorisée par le circuit de mémorisation.

On entend par « prochaine information », toute instruction ou donnée stockée dans la mémoire qui est transmise à l'unité de traitement après la dernière information dans l'ordre de transmission des informations, qui peut être par exemple le même ordre que celui de la séquence d'instructions exécutée par l'unité de traitement.

La prochaine information et la dernière information peuvent être la même information stockée dans un emplacement de la mémoire, par exemple si une même instruction est transmise deux fois consécutives à l'unité de traitement, ou deux informations stockées dans deux emplacements différents de la mémoire.

Le circuit de mémorisation est configuré pour mémoriser une adresse à la fois afin que le circuit logique puisse comparer l'adresse de l'emplacement dans la mémoire de la prochaine information avec une seule adresse mémorisée qui est celle de ladite dernière information.

L'adresse de l'emplacement dans la mémoire de la dernière information ayant déclenchée une transmission du signal d'interruption est mémorisée pour éviter que chaque nouvelle interruption générée lors de la détection d'erreur dans cette information soit transmise à l'unité de traitement.

Le circuit de contrôle de transmission présente avantageusement un circuit logique permettant de transmettre l'interruption si l'adresse de ladite prochaine information est différente de l'adresse mémorisée ou bloquer l'interruption si l'adresse de ladite prochaine information et l'adresse mémorisée correspondent.

Selon un mode de réalisation, le circuit de mémorisation comporte :
- un premier registre configuré pour stocker l'adresse de l'emplacement dans la mémoire de ladite information en cas de détection d'une erreur dans ladite information par le circuit de détection d'erreur,
- un deuxième registre configuré pour stocker l'adresse contenue dans le premier registre avant qu'une erreur soit détectée dans la prochaine information.

Un tel circuit de mémorisation peut donc être réalisé simplement à partir de deux registres par exemple.

Le circuit logique comporte un circuit de comparaison configuré pour générer un signal de commande ayant une valeur correspondant au résultat de la comparaison entre l'adresse contenue dans le premier registre et l'adresse contenue dans le deuxième registre, et un circuit de transmission conditionnelle configuré pour transmettre le signal d'interruption uniquement lorsque l'adresse stockée dans le premier registre ne correspond pas à l'adresse stockée dans le deuxième registre.

Le circuit de transmission conditionnelle, par exemple une porte logique « ET », permet de filtrer, selon le résultat de comparaison du circuit de comparaison, les interruptions générées par le circuit de détection d'erreur afin de ne transmettre que l'interruption générée lorsque l'erreur est détectée pour la première fois dans ladite information.

Selon un mode de réalisation, l'unité de traitement est configurée pour commander le circuit logique de sorte que le circuit logique compare l'adresse mémorisée avec l'adresse de l'emplacement dans la mémoire de la prochaine information dès que l'adresse de la dernière information est mémorisée par le circuit de mémorisation.

On empêche ainsi une nouvelle transmission du signal d'interruption par le circuit logique lorsque l'adresse de la dernière information n'a pas encore été mémorisée par le circuit de mémorisation. Par exemple, une même adresse mémorisée qui est comparée plus d'une seule fois avant d'être actualisée risque de déclencher une transmission de plusieurs signaux d'interruption générés pour une même erreur, par exemple pour une erreur dans une même information transmise plusieurs fois avant que l'adresse mémorisée soit actualisée.

Selon un mode de réalisation, le contrôleur de mémoire comporte un circuit de transmission conditionnelle supplémentaire configuré pour bloquer la transmission du signal d'interruption par le circuit de contrôle de transmission tant que l'adresse de ladite dernière information n'est pas mémorisée par le circuit de mémorisation.

Le circuit de transmission conditionnelle supplémentaire peut être notamment envisagé lorsque le circuit de transmission conditionnelle ne peut plus assurer le blocage de certaines interruptions.

Selon un mode de réalisation, l'unité de traitement est configurée, lors de la réception du signal d'interruption, pour lire l'adresse contenue dans le deuxième registre et pour stocker dans une mémoire additionnelle l'adresse lue.

La mémoire additionnelle permet donc de stocker une adresse unique pour chaque information pour laquelle une erreur a été détectée au cours de l'exécution de la séquence d'instruction par l'unité de traitement.

Selon un mode de réalisation, le circuit intégré comporte en outre un circuit de correction, qui peut être par exemple l'unité de traitement, configuré pour corriger les informations stockées dans la mémoire aux adresses correspondantes stockées dans la mémoire additionnelle.

Ces adresses, une fois stockées dans la mémoire additionnelle, permettent de retrouver toutes les informations erronées directement dans la mémoire et de les corriger lors d'une opération de maintenance, et permettent d'éviter ainsi une correction de ces informations lors de chaque interruption.

Selon un mode de réalisation, l'unité de traitement est configurée pour effacer le contenu du deuxième registre après la correction de ladite information stockée dans la mémoire par l'unité de traitement.

Ainsi, on peut effacer le contenu du deuxième registre après l'opération de maintenance, par exemple lors d'un redémarrage du circuit intégré. Cela permet d'éviter que l'adresse d'une information déjà corrigée lors de l'opération de maintenance reste stockée dans le deuxième registre après l'opération de maintenance.

Selon un autre aspect, il est proposé un procédé de transmission d'au moins une information stockée dans une mémoire à une unité de traitement, comprenant :
- une détection d'une erreur dans ladite information en mettant en oeuvre un algorithme de code de correction d'erreur et, en cas de détection d'une erreur dans ladite information, une génération d'un signal d'interruption,
- une transmission du signal d'interruption uniquement lorsque l'erreur est détectée pour la première fois dans ladite information par le circuit de détection d'erreur.

Selon un mode de mise en oeuvre, le procédé comprend une mémorisation de l'adresse de l'emplacement dans la mémoire de la dernière information ayant déclenchée une transmission du signal d'interruption et une comparaison de l'adresse mémorisée avec l'adresse de l'emplacement dans la mémoire de chaque information, pour laquelle une erreur est détectée, transmise après ladite dernière information de façon à transmettre le signal d'interruption à l'unité de traitement uniquement lorsque l'adresse de l'emplacement dans la mémoire de ladite information ne correspond pas à l'adresse mémorisée par le circuit de mémorisation.

Selon un mode de mise en oeuvre, la mémorisation comprend :
- un stockage dans un premier registre de l'adresse de l'emplacement dans la mémoire de ladite information en cas de détection d'une erreur dans ladite information,
- un stockage dans un deuxième registre de l'adresse contenue dans le premier registre avant qu'une erreur soit détectée dans la prochaine information.

Ladite comparaison comprend une génération d'un signal de commande ayant une valeur correspondant au résultat de la comparaison entre l'adresse contenue dans le premier registre et l'adresse contenue dans le deuxième registre, et une transmission du signal d'interruption uniquement lorsque l'adresse stockée dans le premier registre ne correspond pas à l'adresse stockée dans le deuxième registre.

Selon un mode de mise en oeuvre, ladite comparaison de l'adresse mémorisée avec l'adresse de l'emplacement dans la mémoire de la prochaine information est réalisée dès que l'adresse de la dernière information est mémorisée.

Selon un mode de mise en oeuvre, le procédé comprend un blocage de la transmission du signal d'interruption tant que l'adresse de ladite dernière information n'est pas mémorisée.

Selon un mode de mise en oeuvre, le procédé comprend, lors de la réception du signal d'interruption par l'unité de traitement, une lecture de l'adresse stockée dans le deuxième registre par l'unité de traitement et un stockage dans une mémoire additionnelle de l'adresse lue par l'unité de traitement.

Selon un mode de mise en oeuvre, comprenant un effacement du contenu du deuxième registre après la correction de ladite information stockée dans la mémoire par l'unité de traitement.

D'autres avantages et caractéristiques de l'invention apparaîtront à l'examen de la description détaillée de mode de réalisation et de mise en oeuvre, nullement limitatifs, et des dessins annexés sur lesquels :
[Fig 1] ;
[Fig 2] ; et
[Fig 3] illustrent schématiquement des modes de mise en oeuvre et de réalisation de l'invention.

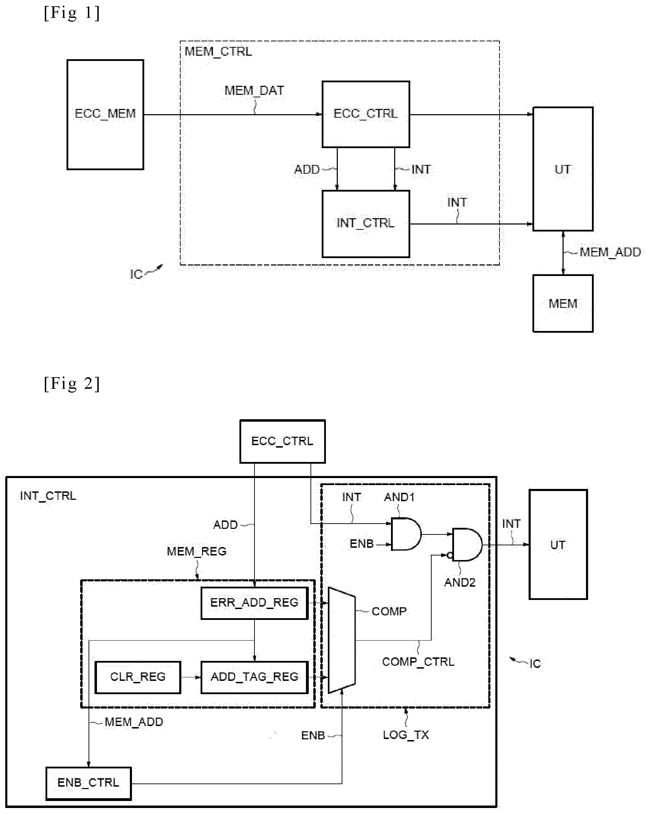

La figure 1 illustre schématiquement un circuit intégré IC selon un mode de réalisation de l'invention. Le circuit intégré IC comprend une mémoire ECC_MEM, telle qu'une mémoire non-volatile, et une mémoire additionnelle MEM, telle qu'une mémoire « RAM » par exemple (pour « Random access memory » en anglais et connu sous l'appellation « mémoire vive » en français)

Le circuit intégré IC comprend également un contrôleur de mémoire MEM_CTRL et une unité de traitement UT, telle qu'un processeur par exemple.

La mémoire ECC_MEM permet typiquement de stocker une information, telle qu'une instruction ou une donnée, ainsi qu'un code de correction d'erreur (connu par l'acronyme « ECC » pour « Error-correcting code » en anglais).

Le contrôleur de mémoire MEM_CTRL est configuré pour transmettre l'information stockée dans la mémoire ECC_MEM à l'unité de traitement UT.

L'information stockée dans la mémoire ECC_MEM, par exemple l'instruction MEM_DAT d'une séquence d'instructions exécutée par l'unité de traitement UT ou une donnée, peut contenir des erreurs.

A cet égard, le contrôleur de mémoire MEM_CTRL comprend un circuit de détection d'erreur ECC_CTRL configuré pour détecter une erreur ou plusieurs erreurs dans ladite information en mettant en oeuvre un algorithme de code de correction d'erreur, et pour générer un signal d'interruption INT en cas de détection d'une erreur dans ladite information MEM_DAT.

Un tel circuit de détection d'erreur ECC_CTRL est bien connu de l'homme du métier qui saura déterminer un algorithme de code de correction d'erreur permettant de détecter la présence d'erreur dans une instruction ou une donnée en fonction du code de correction d'erreur contenu dans la mémoire MEM_ECC. Ces algorithmes de code de corrections d'erreur peuvent être des algorithmes basés sur le code de Hamming ou le code de Golay, bien que ces exemples d'algorithmes ne soient pas exhaustifs.

Le circuit de détection d'erreur ECC_CTRL permet, par exemple, de lire l'instruction MEM_DAT dans la mémoire ECC_MEM et de corriger cette instruction MEM_DAT avant de la transmettre à l'unité de traitement UT.

Le circuit de détection d'erreur ECC_CTRL est configuré pour générer un signal d'interruption INT lors d'une détection d'erreur dans l'information.

Le signal d'interruption INT peut être généré sous forme d'une impulsion correspondant à un niveau logique « haut » pendant une durée donnée lorsqu'une erreur est détectée par le circuit de détection d'erreur ECC_CTRL.

Le signal d'interruption INT interrompt temporairement l'exécution de la séquence d'instructions par l'unité de traitement UT afin de permettre à l'unité de traitement UT de réagir en cas de détection d'une erreur dans l'information MEM_DAT.

Le contrôleur de mémoire MEM_CTRL comprend également un circuit de contrôle de transmission INT CTRL. Le circuit de contrôle de transmission INT_CTRL est configuré pour transmettre le signal d'interruption INT uniquement lorsque l'erreur est détectée pour la première fois dans ladite information par le circuit de détection d'erreur ECC_CTRL.

Par exemple, lorsque le circuit de détection d'erreur ECC_CTRL détecte pour la première fois une erreur dans l'information MEM_DAT, le circuit de contrôle de transmission INT_CTRL transmet le signal d'interruption INT à l'unité de traitement UT mais empêche la transmission des signaux d'interruption qui pourraient être générés par la suite en cas de détection d'erreur dans la même information MEM_DAT.

Le circuit de contrôle de transmission INT_CTRL permet ainsi d'éviter qu'une interruption soit transmise à l'unité de traitement UT lorsqu'une erreur est détectée à nouveau par le circuit de détection d'erreur ECC_CTRL pour une même information.

En transmettant le signal d'interruption INT à l'unité de traitement UT uniquement la première fois que l'erreur est détectée, on évite le déclenchement répété du signal d'interruption qui conduit l'unité de traitement UT à rentrer dans une boucle infinie dans laquelle ce même signal d'interruption est traité par l'unité de traitement.

Par conséquent, l'unité de traitement UT, qui possède par exemple le mécanisme de pré-chargement décrit précédemment, peut poursuivre l'exécution de la séquence d'instructions sans subir de déclenchement répété d'une interruption.

La figure 2 illustre schématiquement un exemple de circuit de contrôle de transmission INT_CTRL du contrôleur de mémoire MEM_CTRL tel que décrit précédemment en relation avec la figure 1.

Le circuit de contrôle de transmission INT_CTRL comporte un circuit de mémorisation MEM_REG et un circuit logique LOG_TX.

Le circuit de mémorisation MEM_REG est configuré pour mémoriser l'adresse de l'emplacement dans la mémoire ECC_MEM de la dernière information ayant déclenchée une transmission du signal d'interruption INT.

Le circuit de mémorisation MEM_REG comprend des éléments matériels permettant de lire l'adresse ADD de l'information pour laquelle une erreur a été détectée, par exemple par l'intermédiaire du circuit de détection d'erreur ECC_CTRL et mémoriser cette adresse ADD.

Le circuit logique LOG_TX est configuré pour comparer l'adresse mémorisée par le circuit de mémorisation MEM_REG avec l'adresse de l'emplacement dans la mémoire ECC_MEM de la prochaine information, pour laquelle une erreur est détectée, transmise après ladite dernière information.

Lors de la comparaison par le circuit logique LOG_TX, si l'adresse de l'emplacement dans la mémoire ECC_MEM de ladite prochaine information ne correspond pas à l'adresse mémorisée par le circuit de mémorisation MEM_REG, alors le signal d'interruption INT est transmis à l'unité de traitement UT.

En d'autres termes, le circuit logique LOG_TX utilise l'adresse mémorisée par le circuit de mémorisation comme base de comparaison avec chaque adresse transmise par le circuit de détection d'erreur ECC_CTRL en cas de détection d'erreur dans l'information, de façon à empêcher que le signal d'interruption INT ne soit transmis une nouvelle fois pour une erreur détectée dans la même information.

Le circuit de contrôle de transmission INT_CTRL comporte en outre un registre de contrôle ENB_CTRL. L'unité de traitement UT est configurée pour commander le circuit logique LOG_TX en fonction de la valeur stockée dans le registre de contrôle ENB_CTRL.

Plus particulièrement, l'unité de traitement UT est configurée pour modifier la valeur du registre de contrôle ENB_CTRL lorsque l'adresse de la dernière information ayant déclenchée le signal d'interruption INT est mémorisée par le circuit de mémorisation MEM_REG. L'unité de traitement UT génère un signal d'activation ENB à partir de la valeur stockée dans le registre de contrôle ENB_CTRL, de façon à permettre au circuit logique LOG_TX de réaliser la comparaison dès que l'adresse de la dernière information est mémorisée par le circuit de mémorisation MEM_REG.

Le circuit de mémorisation MEM_REG comporte un premier registre ERR_ADD_REG et un deuxième registre ADD_TAG_REG.

Le premier registre ERR_ADD_REG est configuré pour stocker l'adresse ADD de l'emplacement dans la mémoire ECC_MEM de ladite information en cas de détection d'une erreur dans ladite information par le circuit de détection d'erreur ECC_CTRL. Chaque nouvelle adresse transmise par le circuit de détection d'erreur ECC_CTRL peut être stockée automatiquement dans le premier registre ERR_ADD_REG en cas de détection d'erreur dans l'information, par exemple en remplaçant l'adresse contenue dans le premier registre ERR_ADD_REG par la nouvelle adresse.

Le deuxième registre ADD_TAG_REG est configuré pour stocker l'adresse contenue dans le premier registre ERR_ADD_REG avant qu'une erreur soit détectée dans la prochaine information.

Par exemple, le stockage de l'adresse dans le deuxième registre ADD_TAG_REG peut être effectué par l'unité de traitement UT en réponse au signal d'interruption INT.

Lors de l'initialisation du circuit intégré IC, le deuxième registre ADD_TAG_REG stocke une valeur d'initialisation qui peut être différente des valeurs des adresses de la mémoire ECC_MEM.

Le circuit logique LOG_TX comporte un circuit de comparaison COMP configuré pour générer un signal de commande COMP_CTRL ayant une valeur correspondant au résultat de la comparaison entre l'adresse contenue dans le premier registre ERR_ADD_REG et l'adresse contenue dans le deuxième registre ADD_TAG_REG.

Le circuit de comparaison COMP peut être un comparateur numérique de conception classique permettant de réaliser une comparaison bit-à-bit entre l'adresse stockée dans le premier registre ERR_ADD_REG et l'adresse stockée dans le deuxième registre ADD TAG REG.

Le signal de commande COMP_CTRL généré par un tel comparateur COMP peut être un signal dont la valeur de tension correspond à un niveau logique différent selon le résultat de la comparaison. Par exemple, le signal de commande COMP_CTRL peut avoir un niveau logique « haut » si les adresses respectivement stockées dans le premier registre ERR_ADD_REG et le deuxième registre ADD_TAG_REG sont identiques et un niveau logique « bas » si ces adresses sont différentes.

Le circuit logique LOG_TX comporte également un circuit de transmission conditionnelle AND2 configuré pour transmettre le signal d'interruption INT uniquement lorsque l'adresse stockée dans le premier registre ERR_ADD _REG ne correspond pas à l'adresse stockée dans le deuxième registre ADD_TAG_REG.

Le circuit de transmission conditionnelle peut être une porte logique configurée pour réaliser l'opération logique « ET » entre le signal d'interruption INT et le signal de commande COMP_CTRL. En particulier, un inverseur peut être connecté à une entrée de la porte logique AND2 de façon à transmettre le niveau logique inverse du signal de commande COMP_CTRL à la porte logique AND2.

Le signal d'interruption INT est alors retransmis en sortie de la porte logique AND2 selon le niveau logique du signal de commande COMP_CTRL. Plus particulièrement, si le niveau logique inverse du signal de commande COMP_CTRL en entrée de la porte logique AND2 est le niveau « haut », par exemple lorsque l'adresse ADD de l'information MEM_DAT est différente de l'adresse mémorisée, alors le signal d'interruption INT est transmis à l'unité de traitement UT. Dans le cas contraire, c'est-à-dire si le niveau logique inverse du signal de commande COMP_CTRL en entrée de la porte logique AND2 est le niveau « bas », alors le signal d'interruption INT n'est pas transmis à l'unité de traitement UT.

Le contrôleur de mémoire MEM_CTRL comporte un circuit de transmission conditionnelle supplémentaire AND1 configuré pour bloquer la transmission du signal d'interruption INT par le circuit de contrôle de transmission INT_CTRL tant que l'adresse de la dernière information n'est pas mémorisée par le circuit de mémorisation MEM_REG.

Le circuit de transmission conditionnelle supplémentaire AND1 peut être une porte logique configurée pour réaliser l'opération logique « ET » entre le signal d'interruption INT et le signal d'activation ENB.

A la réception du signal d'interruption INT, l'unité de traitement UT peut lire l'adresse stockée dans le deuxième registre ADD_TAG_REG et stocker cette adresse dans une mémoire additionnelle MEM.

La mémoire additionnelle MEM permet de stocker l'adresse de chaque information pour laquelle une erreur a été détectée au cours de l'exécution de la séquence d'instruction par l'unité de traitement UT. Ces adresses, une fois stockées dans la mémoire additionnelle, peuvent servir à réaliser une opération de maintenance durant laquelle chaque information erronée qui est stockée dans la mémoire ECC_MEM est corrigée.

A cet égard, le circuit intégré comporte en outre un circuit de correction, qui peut être par exemple l'unité de traitement UT, configuré pour corriger les informations stockées dans la mémoire aux adresses correspondantes stockées dans la mémoire additionnelle.

Lors de l'opération de maintenance, l'unité de traitement UT peut retrouver toutes les informations erronées stockées dans la mémoire ECC_MEM à partir des adresses stockées dans la mémoire additionnelles MEM et corriger ces informations. Une telle opération de maintenance peut notamment avoir lieu après la fin de l'exécution de la séquence d'instructions par l'unité de traitement UT, de façon à éviter de corriger ces informations lors de chaque interruption par exemple.

Le circuit intégré IC peut ensuite redémarrer après l'opération de maintenance. Toutefois, l'adresse de la dernière information ayant déclenché le signal d'interruption INT est encore stockée dans le deuxième registre ADD_TAG_REG après le redémarrage du circuit intégré IC alors que cette information a été corrigée lors de l'opération de maintenance. Le signal d'interruption INT qui serait généré par le circuit de détection d'erreur ECC_CTRL lors de la détection d'une nouvelle erreur dans cette information risque de ne pas être transmis à l'unité de traitement UT si l'adresse de cette information est encore stockée dans le deuxième registre ADD_TAG_REG.

Pour éviter ce risque, l'unité de traitement UT est configurée pour effacer le contenu du deuxième registre ADD_TAG_REG après la correction desdites informations stockées dans la mémoire ECC_MEM par l'unité de traitement UT.

En particulier, le circuit de contrôle de transmission INT_CTRL comporte un registre d'effacement CLR_REG configuré pour stocker une valeur définie par l'utilisateur.

Par exemple, une valeur d'initialisation peut être stockée dans le registre d'effacement CLR_REG lors de la première utilisation du circuit intégré IC de sorte que, lors de chaque redémarrage du circuit intégré IC, l'unité de traitement UT lit la valeur d'initialisation stockée dans le registre d'effacement CLR_REG et remplace la valeur stockée dans le deuxième registre ADD_TAG_REG par cette valeur d'initialisation.

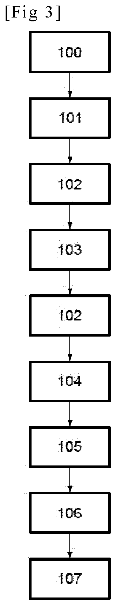

La figure 3 illustre schématiquement un procédé de transmission d'au moins une information stockée dans la mémoire ECC_MEM à l'unité de traitement UT.

Le procédé comprend une étape 100 de détection d'une erreur dans ladite information en mettant en oeuvre un algorithme de code de correction d'erreur et, en cas de détection d'une erreur, ou plusieurs erreurs, dans ladite information, une génération d'un signal d'interruption INT.

Le procédé comprend une étape 101 de transmission du signal d'interruption INT, par exemple par le circuit de contrôle de transmission INT_CTRL tel que décrit précédemment en relation avec les figures 1 et 2, uniquement lorsque l'erreur est détectée pour la première fois dans ladite information par le circuit de détection d'erreur.

Le procédé comprend également une étape 102 de mémorisation de l'adresse de l'emplacement dans la mémoire ECC_MEM de la dernière information ayant déclenchée une transmission du signal d'interruption INT.

L'étape 102 comprend un stockage dans un premier registre ERR_ADD_REG de l'adresse de l'emplacement dans la mémoire ECC_MEM de ladite information en cas de détection d'une erreur dans ladite information.

L'étape 102 comprend également un stockage dans un deuxième registre ADD_TAG_REG de l'adresse contenue dans le premier registre ERR_ADD_REG avant qu'une erreur soit détectée dans la prochaine information. Une valeur d'initialisation, qui peut être différente des valeurs des adresses de la mémoire ECC_MEM, peut être stockée dans le deuxième registre ADD_TAG_REG par défaut si aucune des adresses de la mémoire ECC_MEM n'a été stockée, par exemple lors de l'initialisation du circuit intégré IC.

Le procédé comprend une étape 103 de comparaison, par exemple par un circuit logique LOG_TX, de l'adresse mémorisée avec l'adresse de l'emplacement dans la mémoire ECC_MEM de la prochaine information, pour laquelle une erreur est détectée, transmise après ladite dernière information. Si, à l'issue de cette comparaison, l'adresse de l'emplacement dans la mémoire ECC_MEM de ladite prochaine information ne correspond pas à l'adresse mémorisée par le circuit de mémorisation MEM_REG, alors le signal d'interruption INT est transmis à l'unité de traitement UT.

L'étape 103 comprend une détection de la mémorisation de l'adresse de la dernière information ayant déclenchée une transmission du signal d'interruption INT et une génération d'un signal d'activation ENB à partir de la valeur stockée dans le registre de contrôle ENB_CTRL de façon à permettre au circuit logique LOG_TX de réaliser la comparaison dès que l'adresse de la dernière information est mémorisée par le circuit de mémorisation MEM_REG.

L'étape 103 comprend une génération d'un signal de commande COMP_CTRL. Le signal de commande COMP_CTRL a une valeur correspondant au résultat de la comparaison entre l'adresse contenue dans le premier registre ERR_ADD_REG et l'adresse contenue dans le deuxième registre ADD_TAG_REG.

L'étape 103 comprend également une transmission du signal d'interruption INT uniquement lorsque l'adresse stockée dans le premier registre ERR_ADD_REG ne correspond pas à l'adresse stockée dans le deuxième registre ADD_TAG_REG.

Le procédé comprend une étape 104 de blocage de la transmission du signal d'interruption INT par le circuit de contrôle de transmission INT_CTRL tant que l'adresse de ladite dernière information n'est pas mémorisée.

Le procédé comprend une étape 105 de réception du signal d'interruption INT par l'unité de traitement UT.

L'étape 105 comprend une lecture de l'adresse stockée dans le deuxième registre ADD_TAG_REG par l'unité de traitement UT et un stockage dans une mémoire additionnelle MEM de l'adresse lue par l'unité de traitement UT.

Le procédé comprend, en outre, une étape 106 de correction des informations stockées dans la mémoire ECC_MEM aux adresses correspondantes stockées dans la mémoire additionnelle. La correction de l'étape 107 peut par exemple être effectuée par l'unité de traitement UT.

Le procédé comprend une étape 107 d'effacement du contenu du deuxième registre ADD_TAG_REG après la correction de ladite information stockée dans la mémoire ECC_MEM par l'unité de traitement UT. Un tel effacement peut comprendre par exemple une lecture d'une valeur d'initialisation stockée dans le registre d'effacement CLR_REG et un remplacement de l'adresse stockée dans le deuxième registre ADD_TAG_REG par cette valeur d'initialisation.

## Revendications

1. Circuit intégré (IC) comprenant un contrôleur de mémoire (MEM_CTRL) configuré pour transmettre une information stockée dans une mémoire (ECC_MEM) à une unité de traitement (UT), le contrôleur de mémoire (MEM_CTRL) comprenant :
- un circuit de détection d'erreur (ECC_CTRL) configuré pour détecter une erreur dans ladite information en mettant en oeuvre un algorithme de code de correction d'erreur, et pour générer un signal d'interruption (INT) en cas de détection d'une erreur dans ladite information,
- un circuit de contrôle de transmission (INT_CTRL) configuré pour transmettre le signal d'interruption (INT) à l'unité de traitement (UT) uniquement lorsque l'erreur est détectée pour la première fois dans ladite information par le circuit de détection d'erreur.

2. Circuit intégré selon la revendication 1, dans lequel le circuit de contrôle de transmission (INT_CTRL) comporte un circuit de mémorisation (MEM_REG) configuré pour mémoriser l'adresse de l'emplacement dans la mémoire (ECC_MEM) de la dernière information ayant déclenchée une transmission du signal d'interruption (INT), et un circuit logique (LOG_TX) configuré pour comparer l'adresse mémorisée par le circuit de mémorisation avec l'adresse de l'emplacement dans la mémoire (ECC_MEM) de la prochaine information, pour laquelle une erreur est détectée, transmise après ladite dernière information de façon à transmettre le signal d'interruption (INT) à l'unité de traitement (UT) uniquement lorsque l'adresse de l'emplacement dans la mémoire (ECC_MEM) de ladite prochaine information ne correspond pas à l'adresse mémorisée par le circuit de mémorisation.

3. Circuit intégré selon la revendication 2, dans lequel le circuit de mémorisation (MEM_REG) comporte :
- un premier registre (ERR_ADD_REG) configuré pour stocker l'adresse de l'emplacement dans la mémoire (ECC_MEM) de ladite information en cas de détection d'une erreur dans ladite information par le circuit de détection d'erreur (ECC_CTRL),
- un deuxième registre (ADD_TAG_REG) configuré pour stocker l'adresse contenue dans le premier registre (ERR_ADD_REG) avant qu'une erreur soit détectée dans la prochaine information, le circuit logique (LOG_TX) comportant un circuit de comparaison (COMP) configuré pour générer un signal de commande ayant une valeur correspondant au résultat de la comparaison entre l'adresse contenue dans le premier registre et l'adresse contenue dans le deuxième registre, et un circuit de transmission conditionnelle (AND2) configuré pour transmettre le signal d'interruption (INT) uniquement lorsque l'adresse stockée dans le premier registre ne correspond pas à l'adresse stockée dans le deuxième registre.

4. Circuit intégré selon l'une des revendications 2 ou 3, dans lequel l'unité de traitement est configurée pour commander le circuit logique (LOG_TX) de sorte que le circuit logique compare l'adresse mémorisée avec l'adresse de l'emplacement dans la mémoire de la prochaine information dès que l'adresse de la dernière information est mémorisée par le circuit de mémorisation (MEM_REG).

5. Circuit intégré selon l'une des revendications 2 à 4, dans lequel le contrôleur de mémoire (MEM_CTRL) comporte un circuit de transmission conditionnelle supplémentaire (AND1) configuré pour bloquer la transmission du signal d'interruption (INT) par le circuit de contrôle de transmission (INT_CTRL) tant que l'adresse de ladite dernière information n'est pas mémorisée par le circuit de mémorisation (MEM_REG).

6. Circuit intégré selon l'une des revendications 3 à 5, dans lequel l'unité de traitement (UT) est configurée, lors de la réception du signal d'interruption, pour lire l'adresse stockée dans le deuxième registre (ADD_TAG_REG) et pour stocker dans une mémoire additionnelle (MEM) l'adresse lue par l'unité de traitement (UT).

7. Circuit intégré selon la revendication 6, comportant un circuit de correction configuré pour corriger les informations stockées dans la mémoire (ECC_MEM) aux adresses correspondantes stockées dans la mémoire additionnelle (MEM).

8. Circuit intégré selon la revendication 7, dans lequel l'unité de traitement (UT) est configurée pour effacer le contenu du deuxième registre (ADD_TAG_REG) après la correction de ladite information stockée dans la mémoire (ECC_MEM).

9. Procédé de transmission d'au moins une information stockée dans une mémoire (ECC_MEM) à une unité de traitement (UT), comprenant :
- une détection d'une erreur dans ladite information en mettant en oeuvre un algorithme de code de correction d'erreur et, en cas de détection d'une erreur dans ladite information, une génération d'un signal d'interruption (INT),
- une transmission du signal d'interruption à l'unité de traitement (UT) uniquement lorsque l'erreur est détectée pour la première fois dans ladite information par le circuit de détection d'erreur.

10. Procédé selon la revendication 9, comprenant une mémorisation de l'adresse de l'emplacement dans la mémoire (ECC_MEM) de la dernière information ayant déclenchée une transmission du signal d'interruption (INT) et une comparaison de l'adresse mémorisée avec l'adresse de l'emplacement dans la mémoire (ECC_MEM) de la prochaine information, pour laquelle une erreur est détectée, transmise après ladite dernière information de façon à transmettre le signal d'interruption (INT) à l'unité de traitement (UT) uniquement lorsque l'adresse de l'emplacement dans la mémoire (ECC_MEM) de ladite prochaine information ne correspond pas à l'adresse mémorisée.

11. Procédé selon la revendication 10, dans lequel la mémorisation comprend :
- un stockage dans un premier registre (ERR_ADD_REG) de l'adresse de l'emplacement dans la mémoire (ECC_MEM) de ladite information en cas de détection d'une erreur dans ladite information,
- un stockage dans un deuxième registre (ADD_TAG_REG) de l'adresse contenue dans le premier registre (ERR_ADD_REG) avant qu'une erreur soit détectée dans la prochaine information,
ladite comparaison comprenant une génération d'un signal de commande ayant une valeur correspondant au résultat de la comparaison entre l'adresse contenue dans le premier registre et l'adresse contenue dans le deuxième registre, et une transmission du signal d'interruption (INT) uniquement lorsque l'adresse stockée dans le premier registre ne correspond pas à l'adresse stockée dans le deuxième registre.

12. Procédé selon l'une des revendications 10 ou 11, dans lequel ladite comparaison de l'adresse mémorisée avec l'adresse de l'emplacement dans la mémoire (ECC_MEM) de la prochaine information est réalisée dès que l'adresse de la dernière information est mémorisée.

13. Procédé selon l'une des revendications 10 à 12, comprenant un blocage de la transmission du signal d'interruption (INT) tant que l'adresse de ladite dernière information n'est pas mémorisée.

14. Procédé selon l'une des revendications 10 à 13, comprenant, lors de la réception du signal d'interruption (INT) par l'unité de traitement (UT), une lecture de l'adresse stockée dans le deuxième registre (ADD_TAG_REG) par l'unité de traitement (UT) et un stockage dans une mémoire additionnelle (MEM) de l'adresse lue par l'unité de traitement (UT).

15. Procédé selon la revendication 14, comprenant une correction des informations stockées dans la mémoire (ECC_MEM) aux adresses correspondantes stockées dans la mémoire additionnelle (MEM).

16. Procédé selon la revendication 15, comprenant un effacement du contenu du deuxième registre (ADD_TAG_REG) après la correction de ladite information stockée dans la mémoire (ECC_MEM) par l'unité de traitement (UT).
